# EUROPÄISCHE PATENTSCHRIFT

(11) **EP 2 619 484 B1**
(45) Veröffentlichungstag und Bekanntmachung des Hinweises auf die Patenterteilung: **13.04.2016**
(21) Anmeldenummer: 11725779.0
(22) Anmeldetag: 20.06.2011
(51) Int. Cl.: F16H 63/20, F16H 63/32

(54) **SCHALTANORDNUNG EINES ZAHNRÄDERWECHSELGETRIEBES**
SHIFT ARRANGEMENT FOR A GEAR-CHANGE TRANSMISSION
ENSEMBLE EMBRAYAGE POUR UNE TRANSMISSION À ENGRENAGE

(30) Priorität: 21.09.2010 DE 102010046162
(43) Veröffentlichungstag der Anmeldung: 31.07.2013
(73) Patentinhaber: Schaeffler Technologies AG & Co. KG, 91074 Herzogenaurach (DE)
(72) Erfinder: FEUERBACH, Matthias, 97070 Würzburg (DE); LÖFFELMANN, Jochen, 91330 Eggolsheim (DE); WESSELMANN, Klaus, 90439 Nürnberg (DE)
(86) Internationale Anmeldenummer: PCT/EP2011/060228
(87) Internationale Veröffentlichungsnummer: WO 2012/038106

(56) Entgegenhaltungen:
- EP-A1- 2 116 746
- DE-A1- 3 605 015
- DE-A1-102004 024 679
- US-A- 4 335 623

## Beschreibung

### Gebiet der Erfindung

Die Erfindung betrifft eine Schaltanordnung eines Zahnräderwechselgetriebes, die eine Schaltwelle mit einem Schaltelement sowie eine Schaltgabel mit einem Schaltarm und einem Schaltmaul aufweist, wobei das Schaltmaul die Schaltwelle radial umschließt und mit dem Schaltelement so in Eingriff bringbar ist, so dass die Schaltgabel durch eine Betätigung der Schaltwelle bewegbar ist.

### Hintergrund der Erfindung

Schalteinrichtungen, insbesondere für Zahnräderwechselgetriebe, weisen häufig eine Schaltgabel auf, die mit einer Schaltstange verbunden ist. Die Schaltgabel greift in der Regel formschlüssig in eine Schiebemuffe einer Synchronisiereinrichtung ein, mit der über Kuppelelemente Losräder mit einer Haupt- oder Vorgelegewelle kuppelbar sind. Häufig sind die Schaltgabeln drehstarr mit der Schaltstange verbunden. Alternativ dazu kann jedoch eine als Schaltschwinge geschaltete Schaltgabel axial verschiebbar und/oder verdrehbar zu der Schaltstange angeordnet sein. Die Betätigung der Schaltgabel erfolgt dann mittels eines auf einer Schaltwelle angeordneten Schaltfingers, der formschlüssig in ein mit der Schaltgabel verbundenes Schaltmaul eines Schaltarms eingreift und eine Verschiebung der Schaltgabel ermöglicht.

Derartige Schalteinrichtungen sind beispielsweise in EP 2 116 748 A1 oder DE 36 05 015 A1 offenbart.

DE 10 2005 052 478 A1 zeigt eine Schaltgabel mit einem Schaltgabelgrundkörper, der ein gedoppeltes Blech aufweist, das die Schaltstange beidseitig radial umfasst. Die Schaltgabel weist ferner ein geschlossenes Schaltmaul auf, das durch zwei deckungsgleiche Durchgangsausnehmungen der Bleche gebildet ist. Nachteilig an dieser Ausbildung ist, dass die beiden Bleche miteinander verbunden werden müssen, was den Herstellungsaufwand und die Masse der gesamten Schaltanordnung erhöht. Weiterhin kann der Schaltfinger bei sehr großen Schaltkräften das Schaltmaul verformen und damit besonders bei Schaltmäulern aus dünnem Material aus diesen ausbrechen und zu Fehlfunktionen führt. Insbesondere wenn sich das Schaltmaul ungünstig zu den Lagerstellen der Schaltgabel angeordnet ist, kann sich das Schaltmaul senkrecht zur Schaltrichtung verformen,

US 4 335 623 A1 zeigt eine Schaltanordnung mit den Merkmalen des Oberbegriffs von Anspruch 1.

### Aufgabe der Erfindung

Aufgabe der Erfindung ist es, eine einfach aufgebaute Schaltanordnung zu schaffen, die gewichtsreduziert ist, einfach herstellbar ist und auch bei ungünstiger Anordnung der Bauteile zueinander den Anforderungen an die aufzunehmenden Kräften genügt.

### Lösung der Aufgabe

Die Aufgabe der Erfindung wird erfindungsgemäß gelöst durch eine Schaltanordnung gemäß Anspruch 1. Der Erfindung liegt die Überlegung zugrunde, dass die kraftübertragenden Bauteile im Normalbetrieb deutlich geringer belastet sind als bei der einzuhaltenden Maximalbelastung, die vor allem durch Missbrauchskräfte bestimmt ist. Daher kann die Schaltvorrichtung so abgestimmt werden, dass sie unter Standardbetriebsbedingungen ein besonders widerstandsarmes Schalten ermöglicht, während bei besonders hohen Kräften, wie sie beim "Durchreißen" von Gängen auftreten können, ein hoher Komfortanspruch zugunsten der Betriebssicherheit zurückstehen kann.

Der Schaltarm der Schaltgabel ist aus einem relativ dünnen Material ausgebildet, das sich bei hohem Lasteintrag verformen kann. Erfindungsgemäß kann sich dieses bei hoher Belastung nicht nur an dem Schaltelement, sondern zusätzlich an einem weiteren Punkt der Schaltwelle oder des auf dieser angeordneten Bauteils abstützen. Im Normalfall dagegen ist es von diesem weiteren Punkt beabstandet. Die Erfindung ermöglicht es daher, besonders lange und gleichzeitig leichte Schaltarme einzusetzen. Weiterhin eröffnet sie größere Konstruktionsfreiheiten hinsichtlich Anordnung der Lagerung der Schaltgabel und des Schaltmauls.

Der Schaltarm weist ein Schaltmaul auf, das die Schaltwelle radial umschließt. Der Schaltarm weist also eine Durchgangsausnehmung als Schaltmaul auf, durch die die Schaltwelle geführt ist, wobei ein Teil der Durchgangsausnehmung das Schaltmaul im engeren Sinne bildet.

Die Verformung des Schaltmauls erfolgt erst bei Überschreiten eines Schwellwertes, wobei sicherzustellen ist, dass die Verformung elastisch erfolgt, also reversibel ist. Dazu sind vorzugsweise die Wandungen des Schaltmauls an den Stützstellen um ein verhältnismäßig kleines Maß X beabstandet, so dass sich das Schaltmaul schon bei geringen Verformungen zuverlässig abstützen kann.

Die Stützstelle ist entweder direkt an der Schaltwelle angeordnet oder auf einem zur Schaltwelle in Schaltrichtung fest, also in aller Regel drehfest, angeordneten Bauteil wie einer Rastierhülse, die die Schaltwelle zylindrisch oder teilzylindrisch umgibt.

Eine bevorzugte Ausbildungsform sieht eine Stützstelle vor, die bezüglich der Schaltwelle um 180° versetzt zum Schaltfinger angeordnet ist.

Die Erfindung eignet sich besonders für Schaltarme aus Flachmaterial. Ein Schaltarm lässt sich beispielsweise auf einfache Weise stanzen, wobei gleichzeitig das Schaltmaul in Form einer Ausnehmung in den Schaltarm eingebracht werden kann. Insbesondere bei besonders langen Schaltarmen kann die Erfindung gut eingesetzt werden, da zum einen die Masse des Schaltarms eine verhältnismäßig große Rolle spielt als auch der Schaltarm sich gleichzeitig besonders leicht verformt. Daher lässt sich die Erfindung gut bei Schaltanordnungen einsetzten, bei denen der in die Schaltmuffe eingreifende Teil der Schaltgabel um mehr als den vierfachen, insbesondere mehr als den zehnfachen, Durchmesser der Schaltwelle vom Schaltmaul beabstandet ist.

In einer weiteren Ausgestaltung der Erfindung greift das als Schaltfinger ausgebildete Schaltelement beim Schalten über einen Linien- oder Flächenkontakt am Schaltmaul an. Dazu ist der Schaltfinger während des Schaltvorgangs in einem den Schaltfinger beidseitig flankierenden Kanal angeordnet, dessen Wände so auf die Schaltfingerform abgestimmt sind, dass nicht nur eine punktuelle Anlage erfolgt. Alternativ oder zusätzlich sind kanalendseitig Vorsprünge vorgesehen, die ein Ausbrechen des Schaltfingers aus dem Kanal verhindern.

### Kurze Beschreibung der Zeichnungen

Im Folgenden werden Ausführungsbeispiele der Erfindung anhand von Zeichnungen näher erläutert. Dabei zeigen:
- Figur 1: eine Aufsicht auf einen Schaltarm einer Schaltgabel in einer erfindungsgemäßen Schaltanordnung,

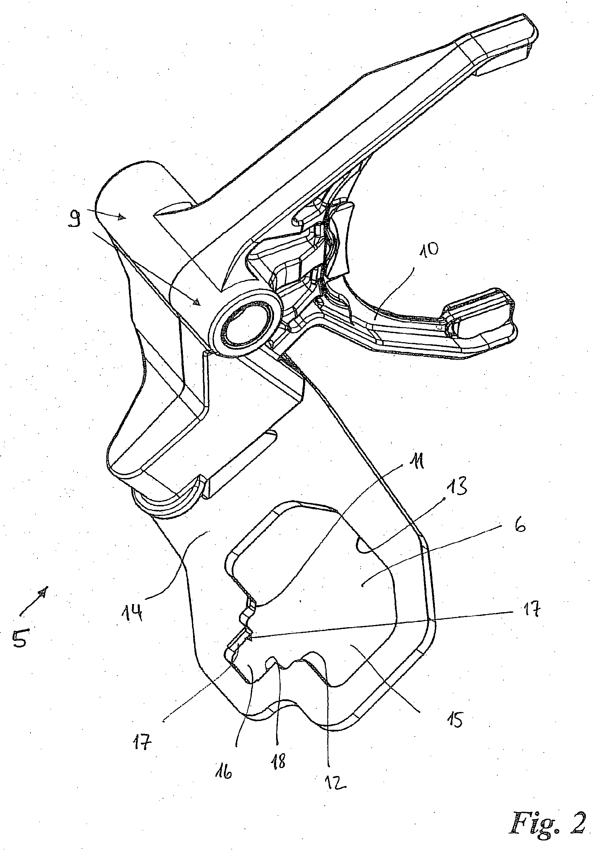

- Figur 2: eine perspektivische Ansicht der Schaltgabel aus Figur 1,
- Figur 3: eine nicht erfindungsgemäße Schaltanordnung mit einer Schaltwelle und einem Schaltmaul einer Schaltgabel in Neutralstellung und
- Figur 4: die Schaltanordnung aus Figur 3 in geschalteter Stellung.

### Ausführliche Beschreibung der Zeichnungen

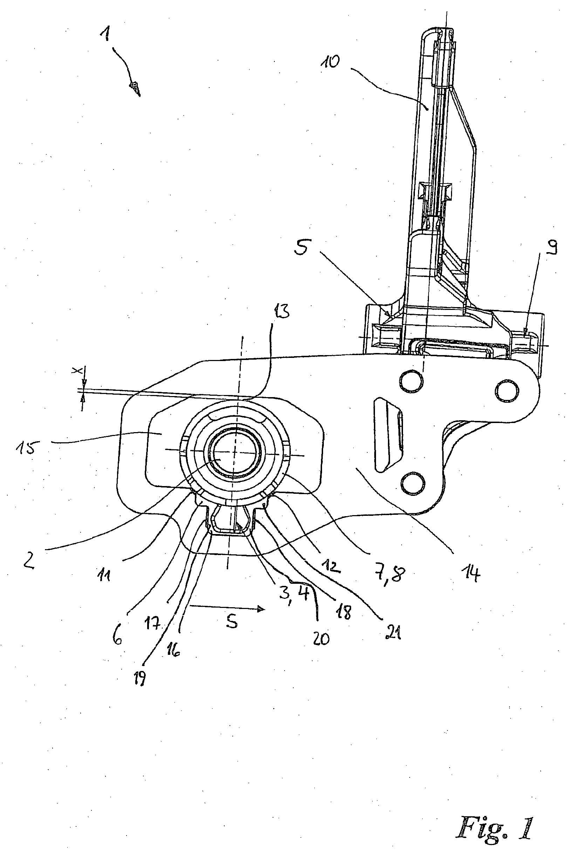

Figur 1 zeigt eine Schaltanordnung 1 mit einer Schaltgabel 5 und einer Schaltwelle 2, auf der ein Bauteil 7 in Form einer Hülse 8 drehfest angeordnet ist. Die Hülse 8 weist einen Schaltfinger 4 als Schaltelement 3 auf, der in ein Schaltmaul 6 der Schaltgabel 5 eingreift. Das Schaltmaul 6 ist als eine Stanzausnehmung in einem Schaltarm 14 ausgebildet. Der Schaltarm 14 ist mit dem Grundkörper 10 verbunden und bildet mit diesem sowie einem Führungsrohr 9 die Schaltgabel 5.

Die Schaltanordnung nach Figur 1 zeigt die Schaltanordnung 1 in Neutralstellung, wobei durch ein Vorwählen der Gasse der Schaltfinger 4 in Axialrichtung der Schaltwelle 2 so positioniert wurde, dass er in der Ebene des Schaltarmes 14 liegt. In dieser Stellung ist er in Schaltrichtung seitlich von Maulwänden 17, 18 eingefasst, aber gleichzeitig durch einen Spalt 19 bzw. 20 um jeweils ein Spiel beabstandet, so dass aufgrund dieses Spiels keine Vibrationen von einer nicht dargestellten Schiebemuffe auf die Schaltwelle 2 übertragen werden.

Das Schaltmaul 6 weist weitere Funktionsflächen 21 auf, die beispielsweise mit einer nicht dargestellten Schaltsperre wechselwirken können. Die Maulwände 17, 18 können zusätzlich nachbearbeitet sein, so dass sie breiter sind als die Blechdicke, oder aber sie sind mit einer Einlegeteil versehen, das aus der Ebene des Schaltarms 14 herausragt und somit eine bessere Abstützung des Schaltfingers 4 ermöglicht. Der Schaltarm weist zwei Fasen 11, 12 auf, wobei zwischen den Fasen 11 bzw. 12 und dem Kanal 16 die Funktionsflächen 21 ausgebildet sind und mit einer in dieser Ebene nicht dargestellten Verriegelungseinheit wechselwirken.

Die Stanzausnehmung ist als Fenster 15 nicht kreisförmig ausgebildet, sondern weist eine Stützstelle 13 auf, die so dicht von der Hülse 8 beabstandet sind, dass unter Lasteintrag ein Verformen des Schaltarms 14 dazu führt, dass sich der Schaltarm 14 an der Stützstelle 13 über der Hülse 8 abstützen kann. Dabei ist die Stützstelle 13 bezüglich der Schaltwelle 2 dem Schaltfinger 4 gegenüberliegend angeordnet. Zwischen der Stützstelle 13 und dem Schaltfinger 4 ist das Fenster 15 so ausgebildet, dass der Schaltarm 14 möglichst leicht ist und dennoch die erforderlichen Kräfte übertragen kann. Die Stützstelle 13 ist um ein vordefiniertes Maß X von der Hülse 8 beabstandet,

Das Abstützen an dieser Stützstelle 13 verhindert ein weiteres Verformen senkrecht zur Schaltrichtung.

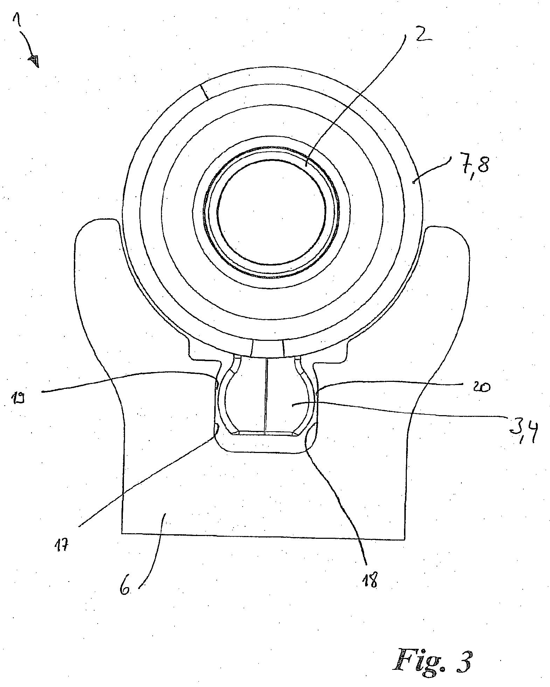

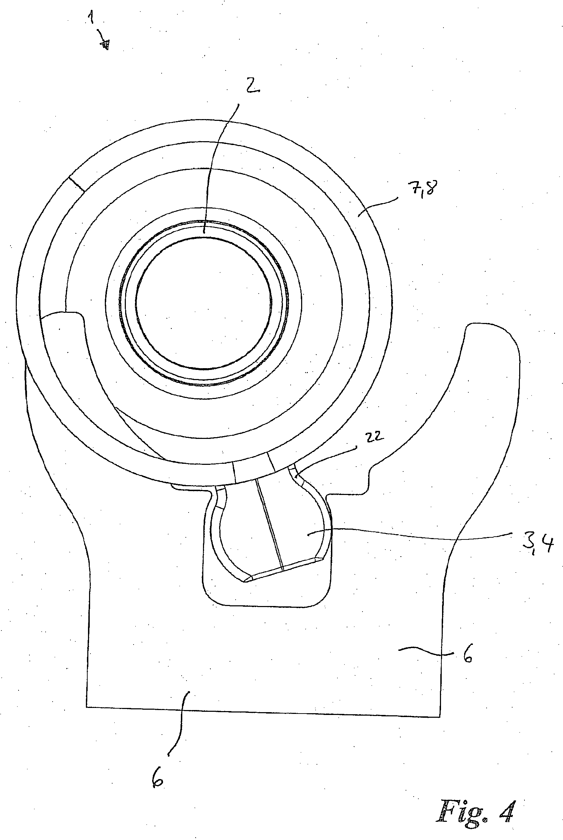

Die Figuren 3 und 4 zeigen ein offenes Schaltmaul 6 als Teil eines nicht weiter dargestellten Schaltarms 14. Das Schaltmaul 6 liegt an der Hülse 8 formschlüssig an bis auf einen mittleren Bereich, in dem es einen zusätzlichen Kanal 16 aufweist, in den ein an der Hülse 8 angeordneter Schaltfinger 4 eingreift. Der Schaltfinger 4 ist in der Neutralstellung (Figur 3) von den Maulwänden 17, 18 durch ein Spiel 19, 20 beabstandet. Der Kanal 16 weist einen im Wesentlichen rechteckigen Querschnitt mit verrundeten Ecken auf, wobei er zur Schaltwelle 2 gerichtet eine durch Vorsprünge 23 gebildete Einschnürung aufweist, um ein Auswandern des Schaltfingers 4 unter Einwirkung großer Kräfte zu verhindern.

Der Schaltfinger 4 ist mit einer verrundeten Außenkontur versehen, die beim Schalten an den Maufwänden 17, 18 entlang gleitet. In den Schaltendstellungen beaufschlagt der Schaltfinger 4 leichter verformbare Außenbereiche des Schaltmauls 6. Aufgrund der durch die Vorsprünge 23 gebildeten Einschnürung werden sind erheblich höhere Schaltkräfte für ein Ausbrechen des Schaltfingers 4 aus dem Schaltmaul 6 erforderlich. Dennoch kann der Schaltfinger 4 wegen seiner zur Hülse 8 gerichteten Verjüngung 22 weiterhin problemlos axial in das Schaltmaul 6 geführt werden. So weist die Schaltanordnung 1 im Normalbetrieb keine Einschränkungen bezüglich des Schaltkomforts auf und erfordert keine Änderung weiterer Bauteile.

### Liste der Bezugszahlen

- 1: Schaltanordnung
- 2: Schaltwelle
- 3: Schaltelement
- 4: Schaltfinger
- 5: Schaltgabel
- 6: Schaltmaul
- 7: Bauteil
- 8: Hülse
- 9: Führungsrohr
- 10: Grundkörper
- 11: Stützstelle
- 12: Fase
- 13: Fase
- 14: Schaltarm
- 15: Fenster
- 16: Kanal
- 17: Maulwand
- 18: Maulwand
- 19: Spalt
- 20: Spalt
- 21: Funktionsfläche
- 22: Verjüngung
- 23: Vorsprung

- S: Schaltrichtung
- X: Maß

## Patentansprüche

1. Schaltanordnung (1) eines Zahnräderwechselgetriebes, die eine Schaltwelle (2) mit einem Schaltelement (3) sowie eine Schaltgabel (5) mit einem Schaltarm (14) aufweist, wobei am Schaltarm (14) ein Schaltmaul (6) angeordnet ist, das die Schaltwelle (2) radial umschließt und mit dem Schaltelement (3) so in Eingriff bringbar ist, dass durch eine Bewegung der Schaltwelle (2) die Schaltgabel (5) bewegbar ist, wobei der Schaltarm (14) aus dünnem Material ausgebildet ist, das sich bei einem hohen Lasteintrag resultierend aus großen Schaltkräften elastisch verformt wobei das Schaltmaul (6) eine zum Schaltement (3) bezüglich der Schaltwelle (2) in Umfangsrichtung versetzt angeordnete Stützstelle (13) aufweist, **dadurch gekennzeichnet, dass** die Stützstelle (13) um ein vordefiniertes Maß (X) von der Schaltwelle (2) oder einem auf der Schaltwelle (2) angeordneten Bauteil (7, 8) beabstandet ist, wobei bei dem genannten Lasteintrag das Verformen des Schaltarms (14) dazu führt, dass sich der Schaltarm (14) an der Stützstelle (13) gegenüber der Schaltwelle (2) oder dem auf der Schaltwelle (2) angeordneten Bauteil (7, 8) abstützt.

2. Schaltanordnung nach Anspruch 1, **dadurch gekennzeichnet, dass** das Schaltmaul (6) aus Flachmaterial ausgebildet ist.

3. Schaltanordnung nach Anspruch 1, **dadurch gekennzeichnet, dass** die Schaltgabel (5) einen gabelförmigen Grundkörper (10) aufweist, der mindestens um den vierfachen Schaltwellendurchmesser von der Schaltwelle (2) beabstandet ist.

4. Schaltanordnung nach Anspruch 1, **dadurch gekennzeichnet, dass** das Bauteil (7) als eine Hülse (8) und das Schaltelement (3) als ein Schaltfinger (4) ausgebildet sind.

5. Schaltanordnung nach Anspruch 1, **dadurch gekennzeichnet, dass** die Stützstelle (13) bezüglich der Längsachse der Schaltwelle (2) ca. 180° versetzt zum Schaltelement (3) angeordnet ist.

6. Schaltanordnung nach Anspruch 1, **dadurch gekennzeichnet, dass** das Schaltmaul (6) als ein Fenster (15) ausgebildet ist, das von der Schaltwelle (2) in Radialrichtung gesehen ungleichmäßig beabstandet ist.

7. Schaltanordnung nach Anspruch 1, **dadurch gekennzeichnet, dass** das Schaltmaul (6) einen Kanal (16) aufweist, in dem das Schaltelement (3) während des Schaltvorgangs angeordnet ist, wobei der Kanal (16) schaltwellenseitig durch Vorsprünge (16) verengt ist.

## Claims

1. Shift arrangement (1) for a gear-change transmission which has a shift shaft (2) with a shift element (3) and a shift fork (5) with a shift arm (14), wherein a shift mouth (6) is arranged on shift arm (14), which shift mouth (6) radially encloses the shift shaft (2) and can thus be brought into engagement with the shift element (3) so that the shift fork (5) can be moved by a movement of the shift shaft (2), wherein the shift arm (14) is configured from thin material which is deformed elastically in the case of a high load introduction in a manner resulting from great shift forces, wherein the shift mouth (6) has a support point (13) which is arranged offset in the circumferential direction to the shift element (3) with regard to the shift shaft (2), **characterized in that** the support point (13) is spaced apart by a predefined amount (X) from the shift shaft (2) or a component (7, 8) which is arranged on the shift shaft (2), wherein, in the case of the stated load introduction, the deformation of the shift arm (14) leads to the shift arm (14) being supported at the support point (13) with respect to the shift shaft (2) or the component (7, 8) which is arranged on the shift shaft (2).

2. Shift arrangement according to Claim 1, **characterized in that** the shift mouth (6) is formed from flat material.

3. Shift arrangement according to Claim 1, **characterized in that** the shift fork (5) has a fork-shaped base body (10) which is spaced apart from the shift shaft (2) at least by four times the shift shaft diameter.

4. Shift arrangement according to Claim 1, **characterized in that** the component (7) is formed as a sleeve (8) and the shift element (3) is formed as a shift finger (4).

5. Shift arrangement according to Claim 1, **characterized in that** the support point (13) is arranged offset by approx. 180° to the shift element (3) relative to the longitudinal axis of the shift shaft (2).

6. Shift arrangement according to Claim 1, **characterized in that** the shift mouth (6) is formed as a window (15) which is unevenly spaced apart from the shift shaft (2) as seen in the radial direction.

7. Shift arrangement according to Claim 1, **characterized in that** the shift mouth (6) has a channel (16) in which the shift element (3) is arranged during the shifting operation, wherein the channel (16) is narrowed by projections (16) on the shift shaft side.

## Revendications

1. Ensemble de commutation (1) pour une boîte de vitesses à engrenages qui présente un arbre de commutation (2) avec un élément de commutation (3) ainsi qu'une fourchette de commutation (5) avec un bras de commutation (14), une mâchoire de commutation (6) étant disposée sur le bras de commutation (14), laquelle entoure radialement l'arbre de commutation (2) et peut être amenée en prise avec l'élément de commutation (3) de telle sorte que par un déplacement de l'arbre de commutation (2), la fourchette de commutation (5) puisse être déplacée, le bras de commutation (14) étant réalisé en matériau mince qui se déforme élastiquement en cas d'application d'une charge élevée résultant de grandes forces de commutation, la mâchoire de commutation (6) présentant un point d'appui (13) disposé de manière décalée de l'élément de commutation (3) dans la direction périphérique par rapport à l'arbre de commutation (2), **caractérisé en ce que** le point d'appui (13) est espacé d'une dimension prédéfinie (X) de l'arbre de commutation (2) ou d'un composant (7, 8) disposé sur l'arbre de commutation (2), la déformation du bras de commutation (14) lors de l'application de ladite charge conduisant à ce que le bras de commutation (14) s'appuie au niveau du point d'appui (13) en face de l'arbre de commutation (2) ou du composant (7, 8) disposé sur l'arbre de commutation (2).

2. Ensemble de commutation selon la revendication 1, **caractérisé en ce que** la mâchoire de commutation (6) est réalisée en un matériau plat.

3. Ensemble de commutation selon la revendication 1, **caractérisé en ce que** la fourchette de commutation (5) présente un corps de base en forme de fourchette (10) qui est espacé de l'arbre de commutation (2) d'au moins quatre fois le diamètre de l'arbre de commutation.

4. Ensemble de commutation selon la revendication 1, **caractérisé en ce que** le composant (7) est réalisé sous forme de douille (8) et l'élément de commutation (3) est réalisé sous forme de doigt de commande (4).

5. Ensemble de commutation selon la revendication 1, **caractérisé en ce que** le point d'appui (13) est disposé de manière décalée d'environ 180° de l'élément de commutation (3) par rapport à l'axe longitudinal de l'arbre de commutation (2).

6. Ensemble de commutation selon la revendication 1, **caractérisé en ce que** la mâchoire de commutation (6) est réalisée sous forme de fenêtre (15) qui est espacée de manière non uniforme, vu dans la direction radiale, de l'arbre de commutation (2).

7. Ensemble de commutation selon la revendication 1, **caractérisé en ce que** la mâchoire de commutation (6) présente un canal (16) dans lequel l'élément de commutation (3) est disposé pendant l'opération de commutation, le canal (16) étant rétréci du côté de l'arbre de commutation par des saillies (16).
